# NEUE EUROPÄISCHE PATENTSCHRIFT

(11) **EP 2 885 461 B2**
(45) Veröffentlichungstag und Bekanntmachung des Hinweises auf die Entscheidung über den Einspruch: **16.10.2024**
(45) Hinweis auf die Patenterteilung: 24.05.2017
(21) Anmeldenummer: 12798616.4
(22) Anmeldetag: 10.12.2012
(51) Int. Cl.: E01C 19/48, B60W 10/30, B60W 10/103, B60W 30/188, B60W 10/06, F16H 61/46, F16H 61/448, F16H 61/4035, F16H 61/4148

(54) **VERFAHREN ZUM EINSTELLEN DER DREHZAHL EINES VERBRENNUNGSMOTORS EINER STRASSENBAUMASCHINE UND STRASSENBAUMASCHINE HIERFÜR**
METHOD FOR ADJUSTING THE ROTATIONAL SPEED OF AN INTERNAL COMBUSTION ENGINE OF A ROAD-BUILDING MACHINE, AND ROAD-BUILDING MACHINE FOR SAID METHOD
PROCÉDÉ POUR RÉGLER LE RÉGIME D'UN MOTEUR À COMBUSTION INTERNE D'UNE MACHINE DE CONSTRUCTION ROUTIÈRE ET MACHINE DE CONSTRUCTION ROUTIÈRE CORRESPONDANTE

(30) Priorität: 18.08.2012 DE 102012016445
(43) Veröffentlichungstag der Anmeldung: 24.06.2015
(73) Patentinhaber: ABG Allgemeine Baumaschinen-Gesellschaft mbH, 31785 Hameln (DE)
(72) Erfinder: TIEDEMANN, Heinz, 31860 Emmerthal (DE)
(74) Vertreter: Eisenführ Speiser
(86) Internationale Anmeldenummer: PCT/EP2012/005086
(87) Internationale Veröffentlichungsnummer: WO 2014/029410

(56) Entgegenhaltungen:
- EP-A1- 2 333 157
- WO-A1-2010/006759
- DE-A1- 3 609 399
- DE-T5- 112008 002 048
- US-A- 5 214 916
- US-A1- 2009 143 952
- US-B1- 6 314 727
- US-B1- 7 665 971

## Beschreibung

Die Erfindung betrifft ein Verfahren zum Einstellen der Drehzahl eines Verbrennungsmotors einer Straßenbaumaschine und eine Straßenbaumaschine mit einem Verbrennungsmotor.

Aus DE 39 11 401 C1 ist bekannt, dass in der Praxis bei einem Straßenfertiger die Drehzahl vom Fahrer manuell reguliert wird. Bei Transport- und Überstellungsfahrten wird die Leistung des Dieselmotors hauptsächlich für den Fahrantrieb gebraucht. Unterschiedliche Fahrsituationen werden vom Fahrer durch kontinuierliche Regelung der Drehzahl des Dieselmotors berücksichtigt. Für den Einbau-Arbeits-Betrieb läuft der Dieselmotor allerdings mit der Nenndrehzahl. Der Fahrer nimmt in der Regel keine Verstellungen vor, weil er den tatsächlichen Leistungsbedarf nicht kennt und vermeiden muss, dass während Unterbrechungen benötigte Arbeitsaggregate nicht mit der erforderlichen Leistung versorgt worden sind. Die Umwelt wird unnötig durch Lärm und Abgase belastet. Auch wird unnötig Treibstoff vergeudet.

Damit im Betrieb des Straßenfertigers die Umweltbelastung und der Treibstoffverbrauch reduziert wird, ohne die Aufmerksamkeit des Fahrers zu beanspruchen, ist aus DE 39 11 401 C1 bekannt, die Drehzahl des Dieselmotors während der Unterbrechung des Einbau-Fahrbetriebs an den Leistungsbedarf der Arbeitsaggregate automatisch anzupassen. Die Anpassung kann dabei so vorgenommen werden, dass in Abhängigkeit vom momentanen Leistungsbedarf Zwischendrehzahlwerte zwischen den beiden Grenzwerten der Nenndrehzahl und der Leerlaufdrehzahl eingestellt werden können. Die Drehzahl wird über eine Verstelleinrichtung an den momentanen Leistungsbedarf angepasst. Mittels der Verstelleinrichtung wird bei einer Unterbrechung oder nach einer Unterbrechung des Einbau-Fahrbetriebs die Drehzahl unverzüglich angepasst, ohne dass der Fahrer hierauf Einfluss zu nehmen hätte. Während des Einbau-Fahrbetriebs ist die Drehzahl des Dieselmotors auf die Nenndrehzahl hochgefahren und wird unverändert beibehalten. Die Umweltbelastung durch Lärm oder Abgase ist spürbar reduziert.

Aus WO 2010/006759 A1 ist bekannt, dass zum Einbau des Straßenbelags vor allem der Fahrantrieb des Straßenfertigers, der Antrieb für die Stampferleiste und/oder die Vibratoren mit konstanter Drehzahl bzw. Frequenz betrieben werden, damit der vom Straßenfertiger hergestellte Straßenbelag sich nicht ändert. Wird zu diesem Zweck der Verbrennungsmotor mit konstanter Drehzahl betrieben, erzeugt der Verbrennungsmotor allerdings vielfach zu viel Energie. Um den Straßenfertiger wirtschaftlich zu betreiben, wird die Drehzahl des Verbrennungsmotors derart erhöht oder erniedrigt, dass die für eine Einbausituation zur Konstanthaltung der Drehzahl bzw. Frequenz benötigte Energie dieser konstant zu haltender Antriebe zugeführt wird. Andere Antriebe, beispielsweise für den Förderer zum Transport des Materials der Straßendecke und für die Verteilerschnecken, können sich mit der Veränderung der Drehzahl des Verbrennungsmotors ändern, da diese keinen Einfluss auf den eingebauten Straßenbelag haben. Der Leistungsbedarf der konstant zu haltenden Antriebe wird gemessen und dazu die Drehzahl des Verbrennungsmotors über eine. Regelung verändert, so dass dieser so viel mehr oder weniger Energie erzeugt, um den geänderten Energiebedarf der konstant zu haltenden Antriebe ausgleicht. Nachteilig ist hierbei, dass die lastabhängige Veränderung der Drehzahl des Verbrennungsmotors durch ein annäherndes Konstanthalten zumindest eines Antriebs bestimmt wird. Die Erhöhung oder Reduzierung der Drehzahl des Verbrennungsmotors richtet sich danach, wieviel Energie benötigt wird, damit bei wechselnden Lasten, z.B. steigendem oder fallendem Gefälle, die konstant zu haltendenden Antriebe mindestens annähernd konstant gehalten werden. Der Verbrennungsmotor des Straßenfertigers erzeugt auch dabei vielfach zu viel Energie, weil die Vorgabe des mindestens einen annähernd konstant zu haltenden Antriebs die lastabhängige Einstellung der Drehzahl des Verbrennungsmotors nachteilig einschränkt.

Aufgabe der Erfindung ist es daher, ein Verfahren zum Einstellen der Drehzahl eines Verbrennungsmotors einer Straßenbaumaschine und eine Straßenbaumaschine hierfür zu schaffen, die einen wirtschaftlichen Betrieb der Straßenbaumaschine erlauben.

Diese Aufgabe wird durch die Merkmale der unabhängigen Ansprüche gelöst.

Hierdurch wird ein Verfahren und eine Straßenbaumaschine geschaffen, bei denen die Drehzahl des Verbrennungsmotors an den jeweiligen momentanen Leistungsbedarf der aktiven Arbeitsaggregate im Einbau-Arbeits-Betrieb automatisch angepasst wird. Die Drehzahl des Verbrennungsmotors wird eingestellt auf eine solche Drehzahl, bei der die Restvolumenströme von Konstantpumpen zum Antreiben von Hydromotoren reduziert sind. Die Reduzierung ist vorzugsweise eine Minimierung derart, dass der Restvolumenstrom des jeweils höchst belasteten Arbeitsaggregates, d.h. dort fließt zum Antrieb der größte Volumenstrom, annähernd Null beträgt.

Der jeweils momentan höchste erforderliche Volumenstrom kann als Maß der möglichen Drehzahlreduzierung gegenüber der Nenndrehzahl des Verbrennungsmotors genutzt werden. Der Verbrennungsmotor bildet somit einen über die Einstellung seiner Drehzahl steuerbaren realen Mengenregler. Die Motorleistung ist üblicherweise in einem großen Drehzahlbereich konstant, so dass die Drehzahlen variiert werden können.

Der Fahrantrieb wird über eine eigenständig einstellbare Hydraulikpumpe versorgt. Die Einbaugeschwindigkeit ist anpassbar daran, ob der lastabhängige Energieeinspargrad vollständig oder nur teilweise genutzt wird.

Die Verwendung von Stromventilen in Verbindung mit Konstantpumpen ergibt eine preiswertere Lösung als die Verwendung von Verstellpumpen. Die Konstantpumpen erzeugen zwar stets den vollen Volumenstrom, so dass der nicht benötigte Restvolumenstrom über ein Ventil abgeführt werden muss. Erfindungsgemäß sind die dabei entstehenden Verluste jedoch reduziert, so dass dieser Nachteil durch die erfindungsgemäße Energieoptimierungsmaßnahme behoben wird.

Die Stromventile der aktiven Arbeitsaggregate sind an eine Steuerung angeschlossen, die die Restvolumenströme lastabhängig variiert, wobei der höchste Volumenstrom auf einen Restvolumenstrom von annähernd Null über die Einstellung der Drehzahl des Verbrennungsmotors erfolgen kann. Das zugehörige Stromventil ist dann beispielsweise vollständig offen.

Weitere Ausgestaltungen der Erfindung sind der nachfolgenden Beschreibung und den Unteransprüchen zu entnehmen.

Die Erfindung wird nachstehend anhand des in der beigefügten Abbildung dargestellten Ausführungsbeispiels näher erläutert.

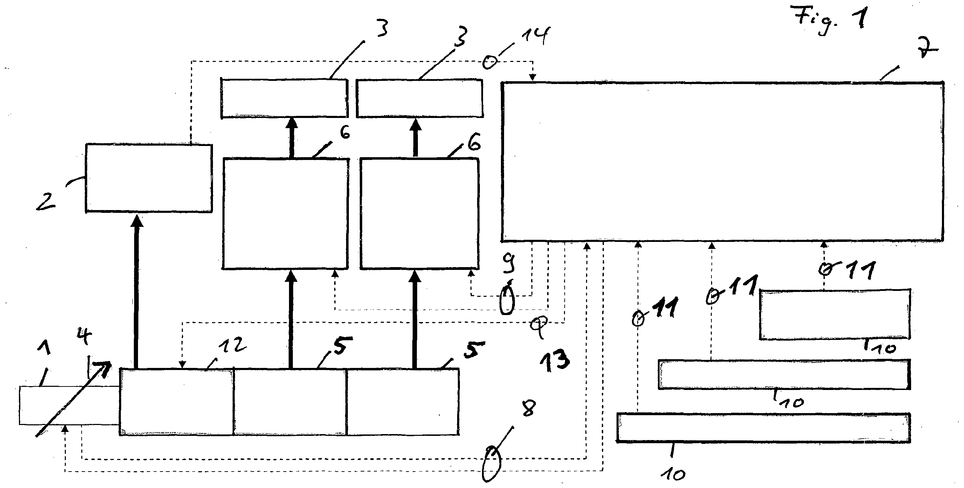

Fig. 1 zeigt ein Blockschaltbild zur Einstellung der Drehzahl eines Verbrennungsmotors einer Straßenbaumaschine.

Wie Fig. 1 zeigt, betrifft die Erfindung ein Verfahren zum Einstellen der Drehzahl eines Verbrennungsmotors 1 einer Straßenbaumaschine, insbesondere eines Straßenfertigers, einer Straßenfräse oder dergleichen, die neben einem Fahrantrieb 2 an den Verbrennungsmotor 1 angeschlossene Hydromotoren 3 zum Treiben von Arbeitsaggregaten aufweist. Bei einem Straßenfertiger zählen zu Arbeitsaggregaten beispielsweise eine Stampferleiste, eine Vibrationseinrichtung für eine Bohle, ein Förderband für einzubauendes Material und eine Verteilerschnecke, die zudem mehrteilig oder mehrfach vorgesehen sein können.

Die Drehzahl des Verbrennungsmotors 1 kann abhängig vom momentanen Leistungsbedarf der Arbeitsaggregate eingestellt werden, wozu der Verbrennungsmotor 1 eine Drehzahlverstelleinrichtung 4 aufweist.

Die Hydromotoren 3 werden unter Verwendung von Konstantpumpen 5 betrieben. Die Konstantpumpen 5 erzeugen stets den vollen Volumenstrom für eine bestimmte Drehzahl des Verbrennungsmotors. Die Höhe des konstanten Volumenstroms wird durch die Drehzahl des Verbrennungsmotors 1 eingestellt.

Da die Konstantpumpen 5 stets den vollen Volumenstrom erzeugen, wird ein für den jeweils zu speisenden Hydromotor 3 nicht benötigter Restvolumenstrom über ein Stromventil 6 abgeführt. Die abhängig von einem Einbau-Arbeits-Betrieb der Straßenbaumaschine momentan abzuführenden Restvolumenströme der Stromventile 6 für Hydromotoren 3 aktiver Arbeitsaggregate werden nun erfindungsgemäß reduziert, wozu die Drehzahl des Verbrennungsmotors 1 während des Einbau-Arbeits-Betriebs automatisch angepasst wird. Eine Erhöhung oder Reduzierung der Drehzahl des Verbrennungsmotors 1 erhöht oder reduziert den Volumenstrom der Konstantpumpen 5. Über die Einstellung der Drehzahl des Verbrennungsmotors 1 wird folglich der Volumenstrom der Konstantpumpen 5 derart verändert, dass energieoptimiert Einfluss genommen wird auf die Restvolumenströme der Konstantpumpen 5. Im Einbau-Arbeits-Betrieb wird der Verbrennungsmotor 1 folglich nicht mehr mit der Nenndrehzahl betrieben, sondern mit einer Drehzahl, die lastabhängig eingestellt ist und abhängig ist vom Leistungsbedarf der aktiven Arbeitsaggregate. Der Leistungsbedarf bzw. Energiebedarf ist hier insbesondere ein Volumen- oder Drehzahlbedarf.

Dazu ist eine Steuerung 7 vorgesehen, die eine Anpassung der Drehzahl des Verbrennungsmotors 1 vornimmt über eine Drehzahl-Signalleitung 8.

Die Anpassung erfolgt derart, dass das Stromventil 6 des Hydromotors 3 des momentan höchstbelasteten Arbeitsaggregates und mit dem dann geringsten Restvolumenstrom die Abstimmung des Drehzahlsignals für die Einstellung der Drehzahl des Verbrennungsmotors 1 vorgibt. Die Energieoptimierung kann soweit durch Verstellen der Drehzahl des Verbrennungsmotors 1 vorgenommen werden, bis mindestens einer, insbesondere der kleinste der Restvolumenströme, auf annähernd Null gebracht wird. Die übrigen Restvolumenströme folgen diesem Verstellmaß zwangsläufig und werden ebenfalls reduziert. Da der Energiebedarf der Hydromotoren 3 für die verschiedenen Arbeitsaggregate im Einbau-Arbeits-Betrieb unterschiedlich ist, ist das Maß der Reduzierung der Restströme ebenfalls unterschiedlich. Die Steuerung 7 verstellt die Stromventile 6 über eine Steuerleitung 9.

Das Reduzieren der Restvolumenströme der Stromventile 6 mehrerer Hydromotoren 3 kann nach Art einer master-slave-Architektur verknüpft werden, wonach der Restvolumenstrom des Stromventils 6 des Hydromotors 3 des momentan höchstbelasteten Arbeitsaggregates die Abstimmung des Drehzahlsignals als master bestimmt, dem die Stromventile 6 der Hydromotoren 3 der anderen aktiven Arbeitsaggregate als slaves folgen.

Vorzugsweise wird mindestens der Restvolumenstrom des jeweils höchstbelasteten Arbeitsaggregates minimiert oder annähernd auf Null gestellt. Der höchste Verbraucher erhält dann den vollen Volumenstrom der zugehörigen Konstantpumpe 5 durch die dazu eingestellte Drehzahl des Verbrennungsmotors 1, während die Stromventile 6 noch Restvolumenströme abführen können, die dann aber zumindest reduziert sind. Die Straßenbaumaschine wird dadurch wirtschaftlicher betrieben.

Der momentane Leistungsbedarf einzelner Arbeitsaggregate wird detektiert und der Steuervorrichtung 7 angezeigt. Mittels Sensoren 10, die über Datenleitungen 11 an die Steuerung 7 angeschlossen sind, kann der Energiebedarf der einzelnen aktiven Arbeitsaggregate während des Einbau-Arbeits-Betriebs ständig ermittelt und an die Steuerung 7 als Eingangsdaten geliefert werden für eine automatische lastabhängige Anpassung der Drehzahl des Verbrennungsmotors 1.

Für den Fahrantrieb 2 ist eine zusätzliche Hydraulikpumpe 12 vorgesehen, um den Fahrantrieb unabhängig von der Drehzahl des Verbrennungsmotors 1 einstellen zu können. Über Steuerleitungen 13, 14 kann die Steuerung 7 den Fahrantrieb unabhängig von der energieoptimierten Einstellung der Drehzahl des Verbrennungsmotors 1 einstellen, da auch eine energieoptimierte Reduzierung der Drehzahl des Verbrennungsmotors 1 gegenüber seiner Nenndrehzahl in einem Einbau-Arbeits-Betrieb ausreichende Leistung für den Fahrantrieb 2 bereitstellt für eine Einstellung auf eine wählbare Fahrgeschwindigkeit.

Zur Durchführung des vorstehend beschriebenen Verfahrens ist vorgesehen eine Straßenbaumaschine, insbesondere ein Straßenfertiger, mit einem Verbrennungsmotor 1 zum Treiben eines Fahrantriebs 2 sowie mehrerer Hydromotoren 3 für Arbeitsaggregate (nicht dargestellt). Weiterhin ist vorgesehen eine Steuervorrichtung für eine Steuerung 7 zum Einstellen der Drehzahl des Verbrennungsmotors 1, abhängig vom momentanen Leistungsbedarf der Arbeitsaggregate.

Jeder der mehreren Hydromotoren 3 ist über eine von dem Verbrennungsmotor 1 antreibbare Konstantpumpe 5 betreibbar, deren voller Volumenstrom über jeweils ein Stromventil 6 beeinflussbar ist, und die Steuerung 7 der Steuereinrichtung als Verbindungsglied zwischen den Stromventilen 6 der Hydromotoren 3 und einem Drehzahlgeber des Verbrennungsmotors 1 angeschlossen ist und eine Anpasssteuerschaltung aufweist, die ein Drehzahlsignal abgestimmt auf eine Reduzierung der momentan abzuführende Restvolumenströme der Stromventile 6 für Hydromotoren 3 aktiver Arbeitsaggregate liefert.

Die Anpasssteuerschaltung zum Treffen einer Auswahl ist derart ausgelegt, dass das Stromventil 6 des Hydromotors 3 des momentan höchstbelasteten Arbeitsaggregates und dem dann geringsten Restvolumenstrom die Abstimmung des Drehzahlsignals für die Einstellung der Drehzahl des Verbrennungsmotors 1 vorgibt.

Die Anpasssteuerschaltung kann ausgelegt sein für eine Verknüpfung der Reduzierung der Restvolumenströme der Stromventile 6 mehrerer Hydromotoren 3 nach Art einer master-slave-Architektu r.

## Patentansprüche

1. Verfahren zum Einstellen der Drehzahl eines Verbrennungsmotors (1) einer Straßenbaumaschine, die neben einem Fahrantrieb (2) an den Verbrennungsmotor (1) angeschlossene Hydromotoren (3) zum Treiben von Arbeitsaggregaten aufweist, und bei dem die Drehzahl abhängig vom momentanen Leistungsbedarf der Arbeitsaggregate eingestellt wird,
**dadurch gekennzeichnet, dass** unter Verwendung von Konstantpumpen (5) die Hydromotoren (3) betrieben werden und momentan abzuführende Restvolumenströme von Stromventilen (6) für die Hydromotoren (3) aktiver Arbeitsaggregate reduziert werden, wozu die Drehzahl des Verbrennungsmotors (1) während eines Arbeitsbetriebs automatisch angepasst wird und die Stromventile (6) über eine Steuerleitung (9) einer Steuerung (7) verstellt werden, wobei die Anpassung derart erfolgt, dass das Stromventil (6) des Hydromotors (3) des momentan höchstbelasteten Arbeitsaggregates und dem dann geringsten Restvolumenstrom die Abstimmung des Drehzahlsignals für die Einstellung der Drehzahl des Verbrennungsmotors (1) vorgibt.

2. Verfahren nach Anspruch 1, **dadurch gekennzeichnet, dass** das Reduzieren der Restvolumenströme der Stromventile (6) mehrerer Hydromotoren (3) nach Art einer master-slave-Architektur verknüpft wird, wonach der Restvolumenstrom des Stromventils (6) des Hydromotors (3) des momentan höchstbelasteten Arbeitsaggregates die Abstimmung des Drehzahlsignals als master bestimmt, dem die Stromventile (6) der (3) der anderen aktiven Arbeitsaggregate als slaves folgen.

3. Verfahren nach einem der Ansprüche 1 bis 2, **dadurch gekennzeichnet, dass** mindestens der Restvolumenstrom des jeweils höchstbelasteten Arbeitsaggregates minimiert wird.

4. Verfahren nach einem der Ansprüche 1 bis 3, **dadurch gekennzeichnet, dass** der momentane Leistungsbedarf einzelner Arbeitsaggregate detektiert und der Steuerung (7) angezeigt wird.

5. Verfahren nach einem der Ansprüche 1 bis 4, **dadurch gekennzeichnet, dass** der Fahrantrieb unabhängig von der Drehzahl des Verbrennungsmotors (1) betrieben wird.

6. Straßenbaumaschine mit einem Verbrennungsmotor (1) zum Treiben eines Fahrantriebs (2) sowie mehrerer Hydromotoren (3) für Arbeitsaggregate und mit einer Steuerung (7) zum Einstellen der Drehzahl des Verbrennungsmotors (1) abhängig vom momentanen Leistungsbedarf der Arbeitsaggregate, **dadurch gekennzeichnet, dass** jeder der mehreren Hydromotoren (3) über eine von dem Verbrennungsmotor (1) antreibbare Konstantpumpe (5) betreibbar ist, deren voller Volumenstrom über jeweils ein Stromventil (6) beeinflussbar ist, und die Steuerung (7) als Verbindungsglied zwischen den Stromventilen (6) der Hydromotoren (3) und einem Drehzahlgeber (4) des Verbrennungsmotors angeschlossen ist und eine Anpasssteuerschaltung aufweist, die ein Drehzahlsignal abgestimmt auf eine Reduzierung der momentan abzuführenden Restvolumenströme der Stromventile (6) für Hydromotoren (3) aktiver Arbeitsaggregate liefert, wozu die Steuerung (7) die Stromventile (6) über eine Steuerleitung (9) verstellt, wobei
die Anpasssteuerschaltung zum Treffen einer Auswahl ausgelegt ist, wonach das Stromventil (6) des Hydromotors (3) des momentan höchstbelasteten Arbeitsaggregates und dem dann geringsten Restvolumenstrom die Abstimmung des Drehzahlsignals für die Einstellung der Drehzahl des Verbrennungsmotors (1) vorgibt.

7. Straßenbaumaschine nach Anspruch 6, **dadurch gekennzeichnet, dass** die Anpasssteuerschaltung ausgelegt ist für eine Verknüpfung der Reduzierung der Restvolumenströme der Stromventile (6) mehrerer Hydromotoren (3) nach Art einer master-slave-Architektur, wonach der Restvolumenstrom des Stromventils (6) des Hydromotors (3) des momentan höchstbelasteten Arbeitsaggregates die Abstimmung des Drehzahlsignals als master bestimmt, dem die Stromventile (6) der Hydromotoren (3) der anderen aktiven Arbeitsaggregate als slaves folgen.

8. Straßenbaumaschine nach einem der Ansprüche 6 bis 7, **dadurch gekennzeichnet, dass** an die Steuerung (7) Sensoren (11) angeschlossen sind, die den momentanen Leistungsbedarf einzelner Arbeitsaggregate anzeigen.

9. Straßenbaumaschine nach einem der Ansprüche 6 bis 8, **dadurch gekennzeichnet, dass** die Steuerung (7) an eine vom Verbrennungsmotor (1) getriebene Fahrantriebspumpe (12) angeschlossen ist, um einen von der Fahrantriebspumpe (12) gespeisten Fahrantriebmotor (2) unabhängig von der Drehzahl des Verbrennungsmotors (1) auf eine wählbare Fahrgeschwindigkeit zu regeln.

10. Straßenfertiger ausgebildet nach einem der Ansprüche 6 bis 9, **dadurch gekennzeichnet, dass** die Arbeitsaggregate einen Stampfer und Vibratoren einer Einbaubohle, eine Verteilerschnecke und ein Förderer eines Straßenfertigers sind.

## Claims

1. Method for adjusting the rotational speed of an internal combustion engine (1) of a road-building machine, which, in addition to a traction drive (2), has hydraulic motors (3), connected to the internal combustion engine (1), for the driving of working units, and in which method the rotational speed is adjusted as a function of the momentary power requirement of the working units, **characterized in that**, using fixed displacement pumps (5), the hydraulic motors (3) are operated and residual volume flows of flow control valves (6) for the hydraulic motors (3) of active working units, which residual volume flows are to be momentarily discharged, are reduced, for which purpose the rotational speed of the internal combustion engine (1) is automatically adapted during working operation and the flow control valves (6) are adjusted via a control line (9) of a control system (7), wherein
the adaptation is realized such that the flow control valve (6) of the hydraulic motor (3) of the momentarily highest loaded working unit, and having the then smallest residual volume flow, predetermines the modulation of the rotational speed signal for the adjustment of the rotational speed of the internal combustion engine (1).

2. Method according to Claim 1, **characterized in that** the reduction of the residual volume flows of the flow control valves (6) of a plurality of hydraulic motors (3) is linked in the manner of a master-slave architecture, according to which the residual volume flow of the flow control valve (6) of the hydraulic motor (3) of the momentarily highest loaded working unit determines the modulation of the rotational speed signal as the master, which the flow control valves (6) of the (3) of the other active working units follow as slaves.

3. Method according to one of Claims 1 to 2, **characterized in that** at least the residual volume flow of the respectively highest loaded working unit is minimized.

4. Method according to one of Claims 1 to 3, **characterized in that** the momentary power requirement of individual working units is detected and notified to the control system (7).

5. The method according to one of claims 1 to 4, **characterized in that** the traction drive is operated independently from the rotational speed of the internal combustion engine (1).

6. Road-building machine having an internal combustion engine (1) for driving a traction drive (2) as well as a plurality of hydraulic motors (3) for working units, and having a control system (7) for adjusting the rotational speed of the internal combustion engine (1) as a function of the momentary power requirement of the working units, **characterized in that** each of the plurality of hydraulic motors (3) can be operated via a fixed displacement pump (5), which is drivable by the internal combustion engine (1) and the full volume flow of which can be influenced via respectively a flow control valve (6), and the control system (7) is connected as a connecting link between the flow control valves (6) of the hydraulic motors (3) and a rotational speed transmitter (4) of the internal combustion engine and has an adaptation control circuit, which delivers a rotational speed signal modulated to reduce the residual volume flows of the flow control valves (6) for hydraulic motors (3) of active working units, which residual volume flows are to be momentarily discharged, for which purpose the control system (7) adjusts the flow control valves (6) via a control line (9) wherein
the adaptation control circuit is designed for making a selection such that the flow control valve (6) of the hydraulic motor (3) of the
momentarily highest loaded working unit, and having the then smallest residual volume flow, predetermines the modulation of the rotational speed signal for the adjustment of the rotational speed of the internal combustion engine (1).

7. Road-building machine according to Claim 6, **characterized in that** the adaptation control circuit is designed for linking the reduction of the residual volume flows of the flow control valves (6) of a plurality of hydraulic motors (3) in the manner of a master-slave architecture, according to which the residual volume flow of the flow control valve (6) of the hydraulic motor (3) of the momentarily highest loaded working unit determines the modulation of the rotational speed signal as the master, which the flow control valves (6) of the hydraulic motors (3) of the other active working units follow as slaves.

8. Road-building machine according to one of Claims 6 to 7, **characterized in that** sensors (11), which indicate the momentary power requirement of individual working units, are connected to the control system (7).

9. Road-building machine according to one of Claims 6 to 8, **characterized in that** the control system (7) is connected to a traction drive pump (12), driven by the internal combustion engine (1), in order to regulate a traction drive motor (2), fed by the traction drive pump (12), to a selectable running speed independently from the rotational speed of the internal combustion engine (1).

10. Road finisher configured according to one of Claims 6 to 9, **characterized in that** the working units are a tamper and vibrators of a paving screed, a spreading auger, and a conveyor of a road finisher.

## Revendications

1. Procède pour ajuster la vitesse de rotation d'un moteur a combustion (1) d'un engin de construction de route qui, en plus d'un moyen de traction (2), comporte des moteurs hydrauliques (3) connectes au moteur a combustion (1) pour l'entrainement d'outils de travail, et dans lequel la vitesse de rotation est ajustée en fonction des besoins instantanés de puissance des outils de travail, **caractérise en ce que**, les moteurs hydrauliques (3) sont actionnes en employant des pompes a débit fixe (5) et **en ce que** les débits de volume résiduel, a évacuer en continu, des soupapes de débit (6) des moteurs hydrauliques (3) des outillages actifs, sont réduits, ce pourquoi la vitesse de rotation du moteur a combustion (1) est automatiquement adaptée pendant une opération de travail et les soupapes de débit (6) sont réglées par un contrôleur (7) via un circuit de commande (9), dans lequel l'adaptation se produit de manière a ce que la soupape de débit (6) du moteur hydraulique (3) de l'outillage présentant momentanément la plus forte charge et par conséquent le plus faible débit de volume résiduel, détermine l'ajustement du signal de la vitesse de rotation pour le réglage de la vitesse de rotation du moteur a combustion (1).

2. Procède selon la revendication 1, **caractérise en ce que** la réduction des débits de volume résiduel des soupapes de débit (6) d'une pluralité de moteurs hydrauliques (3) est lie a la manière d'une architecture maître-esclave selon laquelle le débit de volume résiduel de la soupape de débit (6) du moteur hydraulique (3) de l'outillage de travail ayant momentanément la plus forte charge détermine le niveau du signal de vitesse de rotation en tant que maître, les soupapes de débit (6) des moteurs hydrauliques (3) des autres outillages actifs suivant en tant qu'esclaves.

3. Procède selon l'une des revendications 1 à 2, **caractérise en ce qu'**au moins le débit de volume résiduel de l'outillage de travail ayant la plus forte charge, est minimisée.

4. Procède selon l'une des revendication 1 à 3, **caractérise en ce que** le besoin de puissance instantanée de chaque outil de travail est détecte et indique au contrôleur (7).

5. Procède selon l'une des revendication 1 à 4, **caractérise en ce que** le moyen de traction est entraine indépendamment de la vitesse de rotation du moteur a combustion (1).

6. Engin de construction de route comportant un moteur a combustion (1) pour entrainer un moyen de traction (2) ainsi que plusieurs moteurs hydrauliques (3) pour des outils de travail, un contrôleur (7) réglant la vitesse de rotation du moteur a combustion (1) en fonction du besoin instantané de puissance des outils de travail, **caractérise en ce que** chacun des plusieurs moteurs hydrauliques (3) peut être actionne par une pompe a débit constant (5) entrainable par le moteur a combustion et dont le débit volumétrique total peut être influence par respectivement une soupape de débit (6), **en ce que** le contrôleur (7) est connectée comme interface entre les soupapes de débit (6) des moteurs hydrauliques (3) et un capteur de vitesse de rotation (4) du Moteur a combustion et **en ce qu'**il comporte un circuit de commande d'ajustement qui fournit un signal de vitesse de rotation règle pour une réduction des débits de volume résiduel des soupapes de débit (6) pour les moteurs hydrauliques (3) des outillages actifs, a cette fin, le contrôleur (7) règle les soupapes de débit (6) via une ligne de commande (9), dans lequel le circuit de commande d'ajustement est agence pour faire une sélection selon laquelle la soupape de débit (6) du moteur hydraulique (3) de l'outil de travail ayant momentanément la plus forte charge, et donc le plus petit débit de volume résiduel, fournit le réglage du signal de vitesse de rotation pour l'ajustement de la vitesse de rotation du moteur a combustion (1).

7. Engin de construction de route selon la revendication 6, **caractérise en ce que** le circuit de commande d'ajustement est agence pour combiner la réduction des débits de volume résiduel des soupapes de débit (6) de la pluralité de moteurs hydrauliques (3) a la manière d'une architecture maître-esclave selon laquelle le débit de volume résiduel de la soupape de débit (6) du moteur hydraulique (3) de l'outillage ayant momentanément la plus forte charge, détermine le réglage du signal de vitesse de rotation en tant que maître, les soupapes de débit (6) des moteurs hydrauliques (3) des autres outillages actifs suivant en tant qu'esclaves.

8. Engin de construction de route selon l'une des revendications 6 à 7, **caractérise en ce que** des capteurs (11) qui indiquent le besoin en puissance instantanée de chaque outillage de travail, sont connectées au contrôleur (7).

9. Engin de construction de route selon l'une des revendications 6 à 8, **caractérise en ce que** le contrôleur (7) est connecte a une pompe de traction (12) entrainée par le moteur a combustion (1) de fa9on a réguler un moteur de chaine de propulsion (2) alimente par la pompe de traction (12), a une vitesse sélectionnable indépendamment de la vitesse de rotation du moteur a combustion (1).

10. Engin de construction de route selon l'une des revendications 6 à 9, **caractérise en ce que** les outillages de travail sont un dameur et un vibreur d'une poutre lisseuse, une vis répartitrice et un convoyeur d'un finisseur de route.
